(19) Europäisches Patentamt
European Patent Office
Office européen des brevets

(11) **EP 4 276 489 A1**

(12) **EUROPEAN PATENT APPLICATION**
published in accordance with Art. 153(4) EPC

(43) Date of publication:
**15.11.2023 Bulletin 2023/46**

(21) Application number: **22736528.5**

(22) Date of filing: **05.01.2022**

(51) International Patent Classification (IPC):
**G01S 7/28** (2006.01)

(52) Cooperative Patent Classification (CPC):
**G01S 7/28; G01S 13/87; H04B 1/38**

(86) International application number:
**PCT/CN2022/070271**

(87) International publication number:
**WO 2022/148366 (14.07.2022 Gazette 2022/28)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **08.01.2021 CN 202110026232**

(71) Applicant: **Vivo Mobile Communication Co., Ltd. Dongguan, Guangdong 523863 (CN)**

(72) Inventors:
- YAO, Jian
  Dongguan, Guangdong 523863 (CN)
- JIANG, Dajie
  Dongguan, Guangdong 523863 (CN)
- YUAN, Pu
  Dongguan, Guangdong 523863 (CN)

(74) Representative: **Conti, Marco**
**Bugnion S.p.A.**
**Via di Corticella, 87**
**40128 Bologna (IT)**

(54) **METHOD FOR SENDING RADAR AND COMMUNICATION INTEGRATED SIGNAL, METHOD FOR RECEIVING RADAR AND COMMUNICATION INTEGRATED SIGNAL, AND DEVICE**

(57) Disclosed are a method for sending a radar and communication integrated signal, a method for receiving a radar and communication integrated signal, and a device, which relate to the technical field of communication. The method includes: determining a polarization state of a first signal according to a communication information bit to be sent (Step 201); and sending the first signal according to the polarization state of the first signal, where the first signal is radar signal (Step 202).

FIG. 2

EP 4 276 489 A1

# Description

## CROSS-REFERENCE TO RELATED APPLICATIONS

This application claims the priority of Chinese Patent Application No. 202110026232.4 filed in China on January 8, 2021, the entire content of which is incorporated herein by reference.

## TECHNICAL FIELD

This application belongs to the technical field of communication, and more particularly relates to a method for sending a radar and communication integrated signal, a method for receiving a radar and communication integrated signal, and a device.

## BACKGROUND

Integrated sensing and communication refers to integrated design of communication and perceptive functions realized within the same system through spectrum sharing and hardware sharing. When transferring information, a system can perceive information such as orientation, distance and speed to detect, track and recognize a target device or event, and a communication system and a perception system complement each other, thereby realizing improvement in overall performance and bringing better service experience.

At present, there have been many correlated researches for integrated design of radar and communication systems, and typical joint design includes spectrum coexistence in which the two systems independently work but can allow information exchange so as to reduce mutual interference; receiving end sharing in which sending ends of the two systems send respective signal waveforms, and the waveforms of the two systems are required to have orthogonality, thereby not influencing respective receiving detection; sending end sharing in which sending ends send radar and communication joint waveforms; and receiving-sending end sharing in which resource sharing is performed on receiving and sending sides of the two systems, and the joint waveforms or waveforms with an orthogonality relation are similarly required to be used. In the radar and communication integrated design, waveform design is a key point, and the key of the integrated waveform design is to reduce interference between communication signals and perception signals as much as possible, thereby satisfying communication and perception function requirements, and improving spectrum efficiency on the premise that system performance is guaranteed.

However, adopting the joint waveforms in the current main radar and communication integrated waveform design often requires complex design and optimization, radar detection performance and communication performance are required to be balanced, for example, to ensure functions of radar detection, spectrum efficiency and demodulation performance of the communication system may be reduced, and modulation of communication information will influence a fuzzy function of radar waveforms, and reduce radar signal detection performance.

## SUMMARY

Embodiments of this application provide a method for sending a radar and communication integrated signal, a method for receiving a radar and communication integrated signal, and a device, which can solve the problems that radar and communication integrated signal transmitting in the related technologies cannot balance radar detection performance and communication performance.

In a first aspect, an embodiment of this application provides a method for sending a radar and communication integrated signal, performed by a first communication device, including:

> determining a polarization state of a first signal according to a communication information bit to be sent; and
> sending the first signal according to the polarization state of the first signal,
> where the first signal is radar signal.

In a second aspect, an embodiment of this application provides a method for receiving a radar and communication integrated signal, performed by a second communication device, including:

> receiving a first signal sent by a first communication device,
> where the first signal is radar signal, and a polarization state of the first signal is determined by the first communication device according to a communication information bit to be sent.

In a third aspect, an embodiment of this application provides a communication device, including:

> a first determining module, configured to determine a polarization state of a first signal according to a communication information bit to be sent; and
> a sending module, configured to send the first signal according to the polarization state of the first signal, where the first signal is radar signal.

In a fourth aspect, an embodiment of this application provides a communication device, including:

> a receiving module, configured to receive a first signal sent by a first communication device,
> where the first signal is radar signal, and a polarization state of the first signal is determined by the first communication device according to a communication information bit to be sent.

In a fifth aspect, an embodiment of this application further provides an electronic device, including a processor, a memory, and a program or instruction stored on the memory and runnable on the processor, and the program or instruction, when performed by the processor, implementing the steps of the method according to the first aspect, or the steps of the method according to the second aspect.

In a sixth aspect, an embodiment of this application further provides a readable storage medium, storing a program or instruction, and the program or instruction, when performed by a processor, implementing the steps of the method according to the first aspect, or the steps of the method according to the second aspect.

In a seventh aspect, an embodiment of this application provides a chip, including a processor and a communication interface. The communication interface is coupled to the processor, and the processor is configured to run a program or instruction to implement the method according to the first aspect, or the method according to the second aspect.

In an eighth aspect, an embodiment of this application provides a computer program product, stored in a non-volatile storage medium. The computer program product is performed by at least one processor to implement the steps of the method according to the first aspect, or the steps of the method according to the second aspect.

Accordingly, in the embodiments of this application, the polarization state of the first signal is determined according to the communication information bit to be sent, and then, the first signal is further sent according to the determined polarization state of the first signal, thereby realizing radar and communication signal integrated sending, and the communication information can be transferred while radar detection is performed on a target, facilitating balance of radar detection performance and communication performance.

**BRIEF DESCRIPTION OF THE DRAWINGS**

FIG. 1 is a structural diagram of a wireless communication system;
FIG. 2 is a first schematic flowchart of a method for sending a radar and communication integrated signal according to an embodiment of this application;
FIG. 3 is a second schematic flowchart of a method for sending a radar and communication integrated signal according to an embodiment of this application;
FIG. 4 is a processing schematic diagram of radar signal;
FIG. 5 is a schematic diagram of a polarization modulation scheme for a pulse radar signal;

FIG. 6 is a schematic diagram of a polarization modulation scheme for an FMCW radar signal;
FIG. 7 is a schematic diagram of radar and communication integrated signal sending and receiving;
FIG. 8 is a schematic flowchart of a method for receiving a radar and communication integrated signal according to an embodiment of this application;
FIG. 9 is a structural diagram of a communication device according to an embodiment of this application;
FIG. 10 is a structural diagram of a communication device according to another embodiment of this application;
FIG. 11 is a structural diagram of a communication device according to further embodiment of this application;
FIG. 12 is a structural diagram of a terminal according to an embodiment of this application; and
FIG. 13 is a structural diagram of a network side device according to an embodiment of this application.

**DETAILED DESCRIPTION**

The technical solutions in embodiments of this application are clearly and completely described below in combination with drawings in the embodiments of this application. Apparently, the described embodiments are merely some rather than all of the embodiments of this application. All other embodiments obtained by an ordinary person skilled in the art based on the embodiments of this application without making creative efforts shall fall within the protection scope of this application.

The terms such as "first" and "second" in the specification and claims of this application are used for distinguishing similar objects but not necessarily used for describing any particular order or sequence. It is to be understood that such used data is interchangeable where appropriate so that the embodiments of this application can be implemented in a sequence besides those illustrated or described here. In addition, "and/or" used in the specification and the claims represents at least one of connected objects, and the character "/" generally means that associated objects before and after it are in an "or" relationship.

It is to be pointed out that the technologies described in the embodiments of this application are not limited to long term evolution (Long Term Evolution, LTE)/LTE-advanced (LTE-Advanced, LTE-A) system, and may also be used for other wireless communication systems, such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" in the embodiments of this application can often be exchanged to be used, and the described technology can be applied to the systems and radio technologies mentioned above, and can also be applied to other systems and radio technologies. However, the following description describes, for the illustrative purpose, a new radio (New Radio, NR) system, and NR terms are used in most of the following description, although these technologies may also be applied to applications except NR system applications, such as a 6th generation (6th Generation, 6G) communication system.

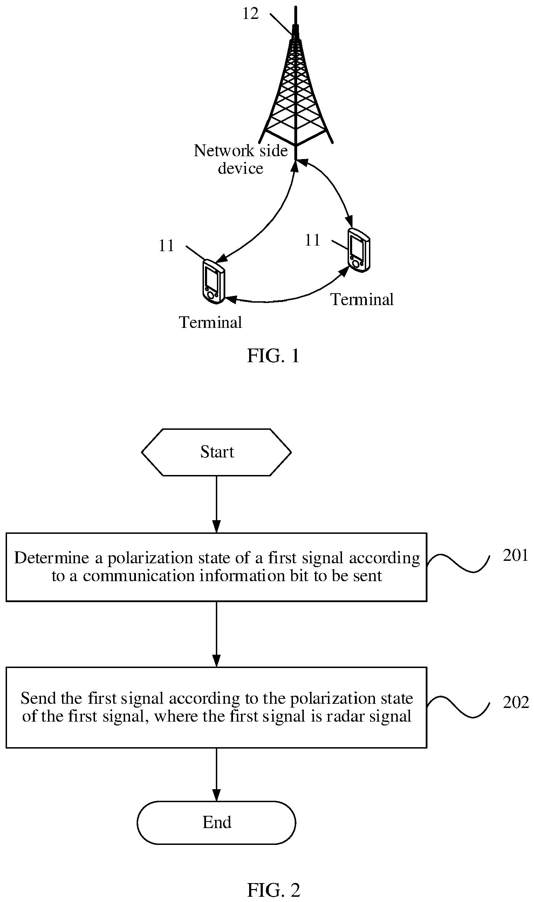

FIG. 1 illustrates a structural diagram of a wireless communication system that can applicable in the embodiments of this application. The wireless communication system includes a terminal 11 and a network side device 12. The terminal 11 may also be called a terminal device or user equipment (User Equipment, UE), or the terminal 11 may be terminal side devices, such as a mobile phone, a tablet personal computer (Tablet Personal Computer, TPC), a laptop computer (Laptop Computer, LC) or called a notebook computer, a personal digital assistant (Personal Digital Assistant, PDA), a palmtop, a netbook, an ultra-mobile personal computer (Ultra-Mobile Personal Computer, UMPC), a mobile Internet device (Mobile Internet Device, MID), a wearable device (Wearable Device), or a VUE (VUE) and a PUE (PUE). The wearable device includes: a bracelet, an earphone, glasses, etc. It is to be noted that, the specific type of the terminal 11 is not limited in the embodiments of this application. The network side device 12 may be a base station or a core network, where the base station may be called a node B, an evolution node B, an access point, a base transceiver station (Base Transceiver Station, BTS), a radio base station, a radio transceiver, a basic service set (Basic Service Set, BSS), an extended service set (Extended Service Set, ESS), a B node, an eNB (eNB), a home node B, a home evolution node B, a WLAN access point, a WiFi node, a transmitting receiving point (Transmitting Receiving Point, TRP) or other appropriate terms in the art, and the base station is not limited to specific technological words as long as the same technical effects are achieved. It is to be noted that, only a base station in the NR system is used as an example in the embodiments of this application, but a specific type of the base station is not limited.

A method for sending a radar and communication integrated signal according to the embodiment of this application is described in detail by combining the drawings and specific embodiments and application scenarios thereof below.

The method in the embodiment of this application is applied to a communication device. The communication device may be the user device, and the user device may refer to an access terminal, a user unit, a user station, a mobile station, a mobile table, a remote station, a remote terminal, a mobile device, a user terminal, a terminal, a wireless communication device, a user agent or a user apparatus. The terminal device may also be a cell phone, a cordless telephone, a session initiation protocol (Session Initiation Protocol, SIP) phone, a wireless local loop (Wireless Local Loop, WLL) station, a PDA, a handheld device with a wireless communication function, a computing device or other processing devices connected to a wireless modem, a vehicle-mounted device and the wearable device. The communication device may also be the network side device, such as the base station or the core network.

As shown in FIG. 2, a method for sending a radar and communication integrated signal according to the embodiment of this application is performed by a first communication device, including:

Step 201: Determining a polarization state of a first signal according to a communication information bit to be sent.

Herein, the communication information bit to be sent is obtained according to communication information to be sent, such as the communication information bit to be sent is 0 or 1, or the communication information bit to be sent is 00, 01, 10 or 11.

In the step, the first communication device determines the polarization state of the first signal according to the communication information bit to be sent, thereby performing a next step.

Step 202: Sending the first signal according to the polarization state of the first signal; where the first signal is radar signal.

In the step, the first signal is sent according to the polarization state of the first signal determined in step 201. Because the first signal is the radar signal and the polarization state thereof is determined based on the communication information bit to be sent, the communication information can be carried on the polarization state of the radar signal, and accordingly, the communication information is transferred while radar detection is performed on a target.

According to the method of the embodiment of this application, the polarization state of the first signal is determined according to the communication information bit to be sent, and then, the first signal is further sent according to the determined polarization state of the first signal, thereby realizing radar and communication signal integrated sending, and performing the radar detection on the target while transferring the communication information. In addition, the radar detection is usually in a line of sight (Line of Sight, LoS) scenario, in which a channel depolarization effect is low, thereby facilitating a receiving end for polarization demodulation.

Optionally, in the embodiment, step 201 includes:

determining the polarization state of the first signal according to an association relationship between the communication information bit to be sent and the polarization state.

Herein, the association relationship between the communication information bit and the polarization state is preset so as to determine, for the communication information bit to be sent, the polarization state of the corresponding radar signal according to the association relationship.

For polarization modulation of the radar signal, a polarization modulation order is associated with a number of an information bit carried by a single polarization modulation symbol. In addition, the higher the polarization modulation order, the more information bit carried by the single polarization modulation symbol, and thus, in order to be applicable to different polarization modulation orders, different association relationship between the communication information bit and the polarization state is preset.

So, optionally, in the embodiment, corresponding to different polarization modulation orders, the association relationship between the communication information bit to be sent and the polarization state is different, and the polarization modulation order is associated with a number of the information bit carried by the single polarization modulation symbol.

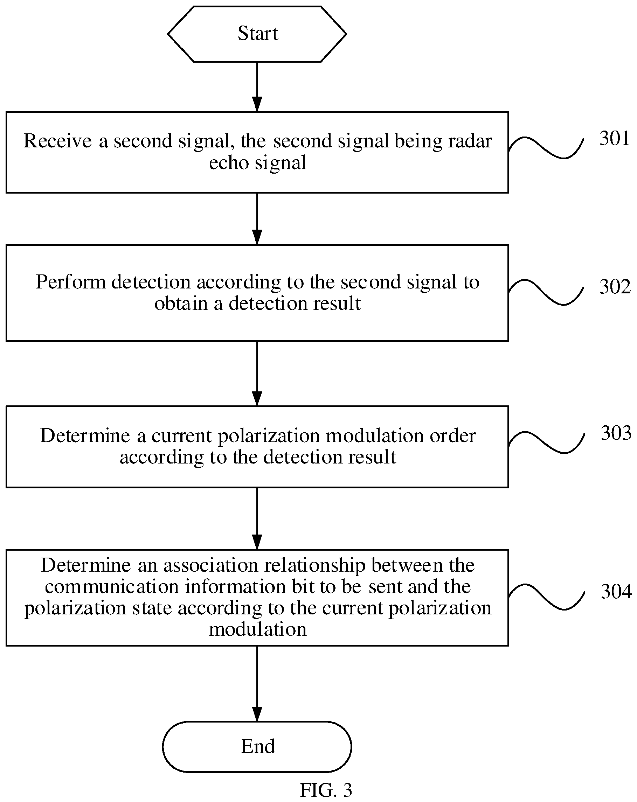

Correspondingly, as shown in FIG. 3, before the polarization state of the first signal is determined according to an association relationship between the communication information bit to be sent and the polarization state, the method further includes:

Step 301: Receiving a second signal, the second signal being radar echo signal.

Herein, the radar echo signal is a signal returned after the first signal, namely the radar signal detects the target.

Step 302: Performing detection according to the second signal to obtain a detection result.

In the step, the detection is performed according to the second signal received in step 301 to generate the detection result. The detection is performed based on preset radar detection parameters. Optionally, the radar detection parameters include but not limited to a distance, Doppler, an angle, a resolution, a coverage area, a detection probability, etc. The radar detection parameters may be adjusted in combination with a current scenario.

Step 303: Determining a current polarization modulation order according to the current detection result.

In the step, after the detection result is obtained in step 302, the current applicable polarization modulation order is further determined according to the detection result. For example, the polarization modulation order is determined according to the parameters such as the distance and the Doppler.

Step 304: Determining, according to the current polarization modulation order, an association relationship between the communication information bit to be sent and the polarization state.

It has been known from the above content that the association relationship between the communication information bit and the polarization state is preset corresponding to the different polarization modulation orders, and the current polarization modulation order is determined in step 303, such that the association relationship between the communication information bit to be sent and the polarization state can be determined based on the current polarization modulation order, thereby more accurately determining the polarization state of the first signal based on the association relationship.

Step 302 includes:

performing polarization characteristic detection according to the polarization state and the second signal to obtain a detection result.

That is, in a scenario with a demand for the polarization characteristic detection, radar detection parameters include relevant parameters of polarization characteristics, the polarization characteristic detection may be performed in combination with the polarization state and the second signal to obtain the required detection result, and of course, the detection result can indicate the current polarization characteristic.

It is to be known that the detection performed according to the second signal in the first communication device is performed in a radar signal processing unit, and thus, if the polarization characteristic detection is required to be performed, the radar signal processing unit may also acquire the current polarization state.

Optionally, step 202 includes:

sending the first signal through an antenna corresponding to the polarization state.

The antenna is a polarized antenna of the first communication device. Thus, according to the communication information bit, the radar signal is sent by different orthogonal polarized antennas to realize modulation, such as binary phase shift keying (Binary Phase Shift Keying, BPSK) modulation.

Optionally, the sending the first signal through an antenna corresponding to the polarization state includes at least one of following manners:

sending, by a first antenna, the first signal;
sending, by a second antenna, the first signal;
sending, by the first antenna and the second antenna, the first signal; and
not sending, by the first antenna and the second antenna, the first signal,
where the polarization state corresponding to the first antenna is orthogonal to the polarization state corresponding to the second antenna.

Optionally, the first antenna is a horizontal polarized antenna, and the second antenna is a vertical polarized antenna; or, the first antenna is a left-hand circularly polarized antenna, and the second antenna is a right-hand circularly polarized antenna.

For example, a sending antenna array of the first communication device at least includes a pair of dual polarized antennas. If the dual polarized antennas are the left-hand circularly polarized antenna and the right-hand circularly polarized antenna, when the communication information bit is 0, the radar signal is sent by the left-hand circularly polarized antenna; and when the communication information bit is 1, the radar signal is sent by the right-hand circularly polarized antenna. Or, when the communication information bit is 00, the radar signal is sent by the left-hand circularly polarized antenna; when the communication information bit is 01, the radar signal is sent by the right-hand circularly polarized antenna; when the communication information bit is 10, the radar signal is not sent; and when the communication information bit is 11, the radar signal is sent by the right-hand circularly polarized antenna and the left-hand circularly polarized antenna at the same time.

If the dual polarized antennas are the horizontal polarized antenna and the vertical polarized antenna, when the communication information bit is 0, the radar signal is sent by the horizontal polarized antenna, and when the communication information bit is 1, the radar signal is sent by the vertical polarized antenna. Or, when the communication information bit is 00, the radar signal is sent by the horizontal polarized antenna; when the communication information bit is 01, the radar signal is sent by the vertical polarized antenna; when the communication information bit is 10, the radar signal is not sent; and when the communication information bit is 11, the radar signal is sent by the horizontal polarized antenna and the vertical polarized antenna at the same time.

In addition, in the embodiment, optionally, a sending probability of 00 bit may be reduced through some encoding modes, thereby reducing influences on radar performance.

In addition, optionally, the sending the first signal according to the polarization state of the first signal includes:

determining an amplitude ratio and a phase difference corresponding to the polarization state;
dividing, through a power divider network, the first signal into two signal components according to the determined amplitude ratio; and
setting, through a phase shift network, phases of the two signal components according to the determined phase difference.

Herein, the polarization state of the radar signal is controlled by the power divider network and the phase shift network to send the first signal, that is, according to the communication information bit, a polarization phase descriptor (amplitude $\delta$ and phase $\varphi$) of the radar signal is changed by the power divider network and the phase shift network to control the polarization state of the radar signal, thereby realizing polarization modulation. Each polarization state corresponds to one point in a constellation diagram. The constellation diagram may be shown on a Poincare spherical surface according to a relationship between Jones vectors and a Poincare sphere.

The amplitude ratio and the phase difference corresponding to each polarization state may also be preset. After the polarization state of the first signal is determined, the corresponding amplitude ratio and phase difference can be determined, and after the polarization state of the first signal is controlled by the power divider network and the phase shift network, the first signal is sent by the at least one pair of dual polarized antennas included by the first communication device.

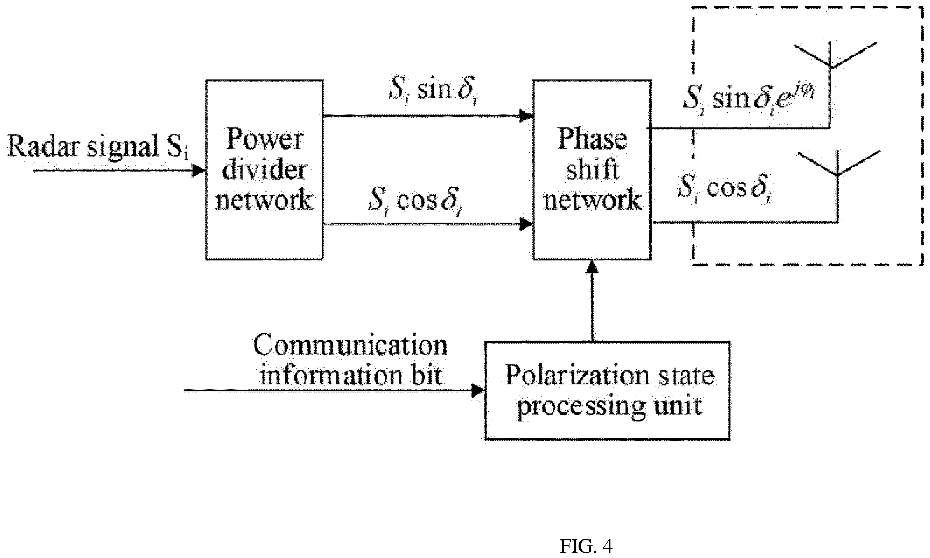

As shown in FIG. 4, a transfer function of the power divider network is denoted by $F = \begin{bmatrix} \cos \delta_l \\ \sin \delta_l \end{bmatrix}$, and the amplitude ratio of the two signal components of the radar signal $S_i$ can be controlled by changing an amplitude ratio control parameter $\delta_i$; and a transfer function of the phase shift network is denoted by $G = \begin{bmatrix} 1 & 0 \\ 0 & e^{j\phi_i} \end{bmatrix}$, and the phase difference of the two signal components of the radar signal $S_i$ can be controlled by changing a phase difference control parameter $\varphi_i$. Accordingly, the radar signal (the first signal) $S_t$ is divided by the power divider network into the first signal component $S_i \sin \delta_i$ and the second signal component $S_i \cos \delta_i$. The first signal component is processed by the phase shift network into $S_i \sin \delta_i e^{j\varphi i}$ and is sent by the first polarized antenna of the dual polarized antennas, and the second signal component is processed by the phase shift network into $S_i \cos \delta_i$ and is sent by the second polarized antenna of the dual polarized antennas. Herein, there may be one or more first polarized antennas, and there may be one or more second polarized antennas.

Optionally, in the embodiment, step 202 includes:

sending the first signal based on a first time unit, where the first time unit is a minimum duration that the first communication device performs polarization modulation on the first signal.

Correspondingly, serving as a communication receiving end of the first communication device, the second communication device receives the first signal based on the first time unit. After determining the first time unit, the second communication device detects information sent by a sending end; and the first time unit may also be a minimum time unit that the second communication device performs polarization information detection. For example, the first time unit is 1 ms or one slot (slot).

Optionally, the first time unit is predefined.

For example, if the first time unit is defined by a protocol, the second communication device determine the first time unit by acquiring the predefined first time units.

Considering the situation that the second communication device cannot acquire the predefined first time units, or the first time units are not predefined, optionally, in the embodiment, the method further includes: sending a notification message, the notification message being used for indicating the first time unit.

Accordingly, the second communication device may receive the notification message to determine the first time unit.

Of course, the second communication device further determines the first time unit through blind detection. Specifically, there are a plurality of first time units which are predefined or indicated by the notification message, for example, the first time unit is 1 ms or 2 ms, and the second communication device determines that the first time unit is 1 ms or 2 ms through the blind detection.

Optionally, the sending the first signal based on a first time unit includes:

repeatedly transmitting the first signal with the first time unit as a basic unit; or,
after the first time unit is adjusted into a second time unit according to adjustment parameter, sending the first signal in the second time unit.

If the first communication device repeatedly transmits the first signal with the first time unit as the basic unit, the first communication device further informs the second communication device of the number N of repeated transmitting times, and N is a natural number greater than or equal to 1. The second communication device determines the first time unit and N, and then detects the information sent by the first communication device.

The adjustment parameter may be predefined. But considering applicability to the scenario, optionally, the adjustment parameter is determined according to a detection result obtained after detection on radar echo signal.

The first communication device can adjust the first time unit according to the detection result obtained after detection on the radar echo signal, and thus, applicability of the adjusted second time unit to the scenario is better.

Similarly, N may be predefined, or dynamically adjusted according to the detection result obtained after detection on the radar echo signal.

For example, the farther the distance, the longer the first time unit, or the N is larger, which makes the second communication device first accumulate and combine signals and then detect the polarization state, thereby obtaining diversity/combined gain, and improving a detection signal-to-noise ratio.

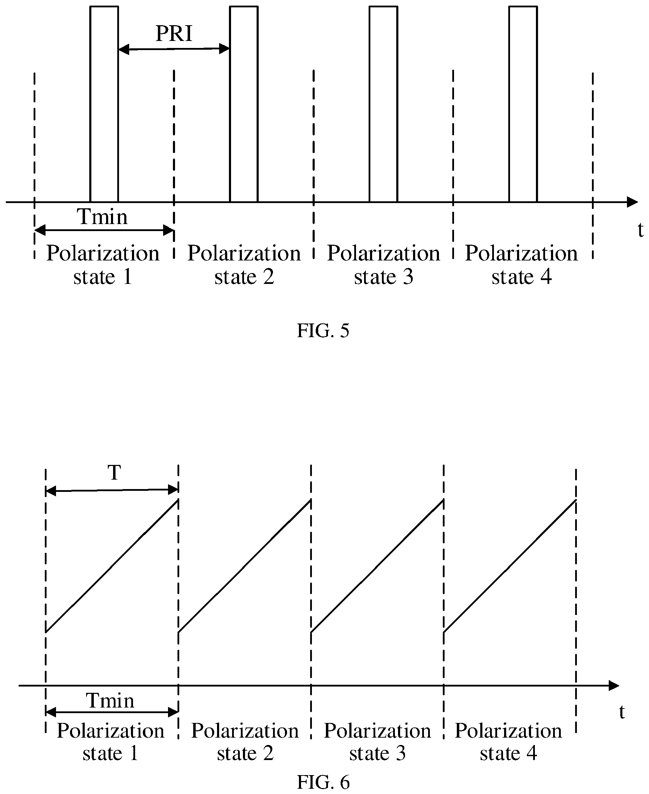

For example, the radar signal is a pulse radar signal. Because the pulse radar signal can radiate short high-frequency pulses, then, the antenna is switched to a receiver to receive signals, signal sending and receiving are separated in time, and a polarization modulation scheme is shown in FIG. 5. Pulse repetition interval (Pulse Repetition Interval, PRI) may be used for representing a radar pulse sending speed, and $T_{min}$ is a min-

imum time interval (the first time unit) in the polarization modulation scheme. When the radar and communication integrated signal is sent based on pulse signals, there is at least one radar pulse signal within each $T_{min}$. As mentioned above, to improve the detection signal-to-noise ratio, $T_{min}$ can be increased, that is a communication information transmitting rate is reduced, such that there are at least a plurality of radar pulse signals within each $T_{min}$; or, the communication information is repeatedly sent according to $T_{min}$, that is, a plurality of continuous $T_{min}$ correspond to the same polarization state, namely the same communication information bit.

Or, the radar signal is a continuous wave radar signal, which may be a single-frequency continuous wave (Continuous Wave, CW) or frequency modulated continuous wave (Frequency Modulated Continuous Wave, FMCW). Taking the FMCW as an example, a polarization modulation scheme is shown in FIG. 6, T denotes an FMCW frequency sweep cycle, and $T_{min}$ is a minimum time interval (the first time unit) in the polarization modulation scheme. Preferably, polarization state switchover is performed when each FMCW frequency sweep cycle starts or ends, that is, the polarization state is kept unchangeable within each FMCW frequency sweep cycle, corresponding to the same communication information bit. As mentioned above, to improve the detection signal-to-noise ratio, $T_{min}$ can be increased, that is the communication information transmitting rate is reduced, such that there are at least a plurality of frequency sweep cycles within each $T_{min}$; or, the communication information is repeatedly sent according to $T_{min}$, that is, a plurality of continuous $T_{min}$ correspond to the same polarization state, namely the same communication information bit. Optionally, given a fixed FMCW frequency sweep cycle, to further improve the communication rate, $T_{min}$ is reduced, such that the radar signal in one frequency sweep cycle T corresponds to a plurality of polarization states, namely, different communication information bits.

It is to be noted that, in the embodiment, the first communication device may serve as a sending end of the first signal, or a receiving end of the first signal sent by a third communication device, which is not repeated herein.

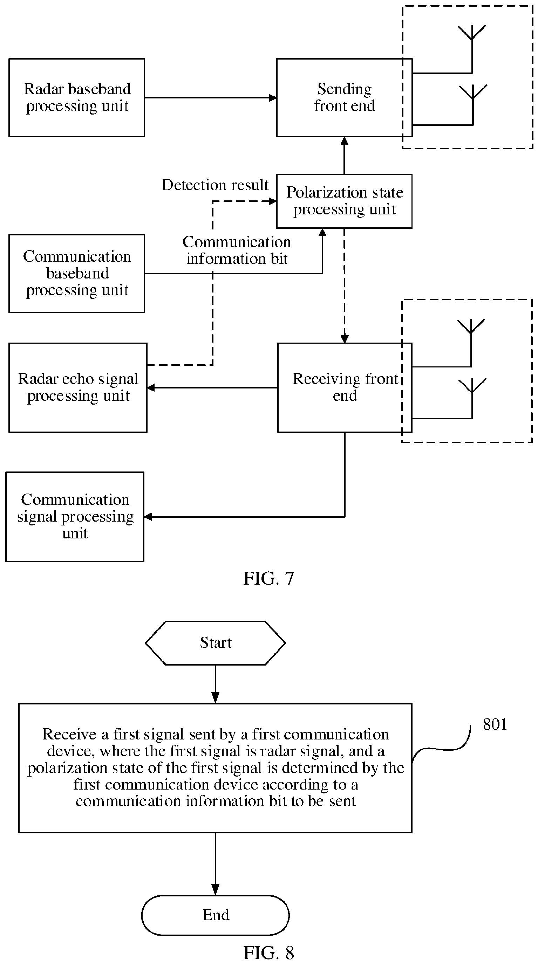

As shown in FIG. 7, receiving and sending of a first signal are explained below by combining a structure of a first communication device performing a method for sending a radar and communication integrated signal according to the embodiment of this application.

A baseband processing part is divided into a radar baseband processing unit and a communication baseband processing unit. The radar baseband processing unit is configured to generate radar signals, such as pulse signals or continuous wave signals; and the communication baseband processing unit is configured to generate communication information (communication source information) so as to obtain a communication information bit, optionally, the communication baseband processing unit may also perform scrambling and encoding.

A polarization state processing unit is configured to determine a polarization state according to the communication information bit.

A sending front end and a sending antenna array are shared by a communication system and a radar system, responsible for digital to analog conversion of the radar signals, up-conversion, polarization modulation on the radar signals based on the communication information bit, and joint signal sending. The sending antenna array at least includes a pair of dual polarized antennas, such as a left-hand circularly polarized antenna and a right-hand circularly polarized antenna, or a horizontal polarized antenna and a vertical polarized antenna.

A receiving front end and a receiving antenna array are shared by the communication system and the radar system, responsible for down-conversion, analog to digital conversion and amplitude-phase calibration of the radar signals and/or communication signals. The receiving antenna array at least includes a pair of dual polarized antennas, such as a left-hand circularly polarized antenna and a right-hand circularly polarized antenna, or a horizontal polarized antenna and a vertical polarized antenna.

The radar signal processing unit is configured to analyze and detect radar echo signals to obtain corresponding radar detection parameters, such as a distance, Doppler, an angle, a resolution, a coverage area and a detection probability, and or perform polarization characteristic analysis on the radar echo signals based on a sending end communication information bit.

A communication signal processing unit is configured to perform decoding judgment and polarization demodulation on the communication signals.

In conclusion, according to the method of the embodiment of this application, the polarization state of the first signal is determined according to the communication information bit to be sent, and then, the first signal is further sent according to the determined polarization state of the first signal, thereby realizing radar and communication signal integrated sending, and performing radar detection on a target while transferring the communication information. In addition, the radar detection is usually in an LoS (LoS) scenario, in which a channel depolarization effect is low, thereby facilitating the receiving end for the polarization demodulation.

As shown in FIG. 8, a method for receiving a radar and communication integrated signal according to an embodiment of this application is performed by a second communication device, including:

> Step 801: Receiving a first signal sent by a first communication device,
> where the first signal is radar signal, and a polarization state of the first signal is determined by the first communication device according to a communication information bit to be sent.

By receiving the first signal, the first signal is the radar signal, and the polarization state of the first signal is determined by the first communication device according to the communication information bit to be sent, thereby realizing radar and communication signal integrated transmitting, and performing radar detection on a target while transferring communication information. In addition, the radar detection is usually in an LoS (LoS) scenario, in which a channel depolarization effect is low, thereby facilitating a receiving end for polarization demodulation.

Optionally, before step 801, the method further includes:
determining a first time unit.

The receiving a first signal sent by a first communication device includes:

> receiving the first signal based on the first time unit, where the first time unit is a minimum duration that the first communication device performs polarization modulation on the first signal.

Optionally, the determining a first time unit includes at least one of following manners:

> receiving a notification message sent by the first communication device, the notification message being used for indicating the first time unit;
> acquiring the predefined first time unit; and
> determining the first time unit through blind detection.

Optionally, after the receiving a first signal sent by a first communication device, the method further includes:
performing polarization demodulation on the first signal.

Specifically, the first signal is sent through an antenna corresponding to the polarization state, the second communication device may adopt non-coherent demodulation to directly measure receiving power of different orthogonal polarized antennas, for example, if a left-hand circularly polarized antenna and a right-hand circularly polarized antenna are adopted, when receiving power of the left-hand circularly polarized antenna of the second communication device is high, it is recognized that a communication information bit sent by a sending end is 0, and when receiving power of the right-hand circularly polarized antenna of the second communication device is high, it is recognized that the communication information bit sent by the sending end is 1; and if a horizontal polarized antenna and a vertical polarized antenna are adopted, when receiving power of the horizontal polarized antenna of the second communication device is high, it is recognized that the communication information bit sent by the sending end is 0, and when receiving power of the vertical polarized antenna of the second communication device is high, it is recognized that the communication information bit sent by the sending end is 1. Or, for example, if the left-hand circularly polarized antenna and the right-hand circularly polarized antenna are adopted, when the receiving power of the left-hand circularly polarized antenna of the second communication device is high, it is recognized that the communication information bit sent by the sending end is 00, when the receiving power of the right-hand circularly polarized antenna of the second communication device is high, it is recognized that the communication information bit sent by the sending end is 01, when the receiving power of the left-hand circularly polarized antenna and the right-hand circularly polarized antenna is low, such as lower than a certain threshold, it is recognized that the communication information bit by the sent sending end is 10, and when the receiving power of the left-hand circularly polarized antenna and the right-hand circularly polarized antenna is high, such as higher than a certain threshold, it is recognized that the communication information bit sent by the sending end is 11; and if the horizontal polarized antenna and the vertical polarized antenna are adopted, when the receiving power of the horizontal polarized antenna of the second communication device is high, it is recognized that the communication information bit sent by the sending end is 00, when the receiving power of the vertical polarized antenna of the second communication device is high, it is recognized that the communication information bit sent by the sending end is 01, when the receiving power of the horizontal polarized antenna and the vertical polarized antenna is low, such as lower than a certain threshold, it is recognized that the communication information bit sent by the sending end is 10, and when the receiving power of the horizontal polarized antenna and the vertical polarized antenna is high, such as higher than a certain threshold, it is recognized that the communication information bit sent by the sending end is 11. The polarization state of the radar signal is controlled by the power divider network and the phase shift network to send the first signal, the second communication device may adopt a Stokes (Stokes) parameter extraction method to obtain Stokes vectors of the radar signal, the first communication device controls the polarization phase descriptor of the radar signal, that is, the Jones vectors of the radar signal are controlled to obtain different polarization states, corresponding to different constellation points in M-quadrature amplitude modulation (M-Quadrature Amplitude Modulation, MQAM), and after the second communication device obtains the Stokes vectors of the radar signal, the polarization state of the radar signal sent by the sending end can be known according to a one-to-one mapping relationship between the Stokes vectors and the Jones vectors, thereby realizing polarization demodulation.

In the embodiment, the second communication device may serve as a receiving end of the first signal, or a sending end of the first signal received by a fourth communication device, which is not repeated herein.

It is to be noted that, the method is implemented in cooperation with the above method for sending a radar and communication integrated signal, and an implementation of the embodiments of the above method for sending a radar and communication integrated signal is applicable to the method and can also achieve the same technical effects.

It is to be noted that, a performable body of the method provided by the embodiment of this application may be an apparatus, or a control module configured to performed a loading method in the apparatus. The embodiment of this application adopts the apparatus performing the loading method as an example to describe the method for sending a radar and communication integrated signal or the method for receiving a radar and communication integrated signal provided by the embodiment of this application.

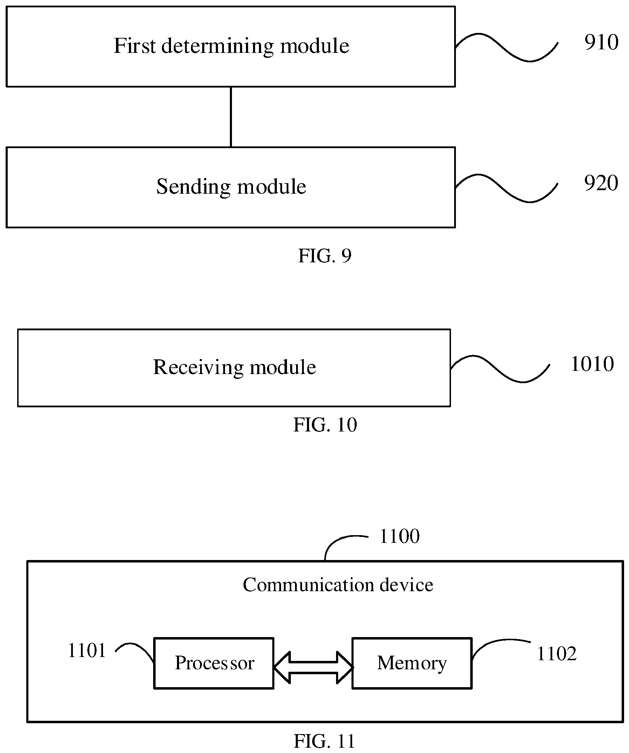

As shown in FIG. 9, a communication device according to an embodiment of this application includes:

> a first determining module 910, configured to determine a polarization state of a first signal according to a communication information bit to be send; and
> a sending module 920, configured to send the first signal according to the polarization state of the first signal,
> where the first signal is radar signal.

Optionally, the first determining module is further configured to:
determine the polarization state of the first signal according to an association relationship between the communication information bit to be sent and the polarization state.

Optionally, corresponding to different polarization modulation orders, association relationship between the communication information bit to be sent and the polarization state is different, and the polarization modulation order is associated with a number of an information bit carried by a single polarization modulation symbol; and
the device further includes:

> a receiving module, configured to receive a second signal, the second signal being radar echo signal;
> a detection module, configured to perform detection according to the second signal to obtain a detection result;
> a first processing module, configured to determine a current polarization modulation order according to the detection result; and
> a second processing module, configured to determine, according to the current polarization modulation order, an association relationship between the communication information bit and the polarization state.

Optionally, the detection module includes:
performing polarization characteristic detection according to the polarization state and the second signal to obtain a detection result.

Optionally, the sending module includes:
a first sending submodule, configured to send, by an antenna corresponding to the polarization state, the first signal.

Optionally, the first sending submodule sends the first signal through at least one of following manners:

> sending, by a first antenna, the first signal;
> sending, by a second antenna, the first signal;
> sending, by the first antenna and the second antenna, the first signal; and
> not sending, by the first antenna and the second antenna, the first signal,
> where the polarization state corresponding to the first antenna is orthogonal to the polarization state corresponding to the second antenna.

Optionally, the first antenna is a horizontal polarized antenna, and the second antenna is a vertical polarized antenna; or, the first antenna is a left-hand circularly polarized antenna, and the second antenna is a right-hand circularly polarized antenna.

Optionally, the sending module includes:

> a determining submodule, configured to determine an amplitude ratio and a phase difference corresponding to the polarization state;
> a first processing submodule, configured to divide, through a power divider network, the first signal into two signal components according to the determined amplitude ratio; and
> a second processing submodule, configured to set, through a phase shift network, phases of the two signal components according to the determined phase difference.

Optionally, the sending module is further configured to:

> send the first signal based on a first time unit,
> where the first time unit is a minimum duration that the first communication device performs polarization modulation on the first signal.

Optionally, the first time unit is predefined.
Optionally, the device further includes:
a notification module, configured to send a notification message, the notification message being used for indicating the first time unit.

Optionally, the sending module is further configured to:

> repeatedly transmit the first signal with the first time unit as a basic unit; or,
> after the first time unit is adjusted into a second time unit according to adjustment parameter, send the first signal in the second time unit.

Optionally, the adjustment parameter is determined according to a detection result obtained after detection on radar echo signal.

The communication device determines the polarization state of the first signal according to the communication information bit to be sent, and then, further sends the first signal according to the determined polarization state of the first signal, thereby realizing radar and communication signal integrated sending, and performing radar detection on a target while transferring communication information. In addition, the radar detection is usually in an LoS (LoS) scenario, in which a channel depolarization effect is low, thereby facilitating a receiving end for polarization demodulation.

The communication device in the embodiment of this application may also be a terminal, such as a mobile electronic device or a non-mobile electronic device. Exemplarily, the mobile electronic device may be a mobile phone, a tablet computer, a notebook computer, a palm computer, an vehicle-mounted electronic device, a wearable device, a UMPC, a netbook, or a PDA, or the like; and the non-mobile electronic device may be a server, a network attached storage (Network Attached Storage, NAS), a personal computer (Personal Computer, PC), a television (Television, TV), a teller machine, or a self-service machine, which are not specifically limited in the embodiment of this application. Of course, a network side device may also be adopted.

The communication device in the embodiment of this application may be a device with an operating system. The operating system may be an Android (Android) operating system, or an ios operating system, or another possible operating system, which is not specifically limited in the embodiment of this application.

The communication device in the embodiment of this application can implement all processes implemented by the first communication device in the method embodiments shown in FIG. 2 to FIG. 7, which is not repeated herein to avoid repetition.

As shown in FIG. 10, a communication device according to an embodiment of this application includes:

> a receiving module 1010, configured to receive a first signal sent by a first communication device,
> where the first signal is radar signal, and a polarization state of the first signal is determined by the first communication device according to a communication information bit to be sent.

Optionally, the device further includes:
a second determining module, configured to determine a first time unit.

The receiving module is further configured to:

> receive the first signal based on the first time unit,
> where the first time unit is a minimum duration that the first communication device performs polarization modulation on the first signal.

Optionally, the second determining module determines the first time unit through at least one of following manners:

receiving a notification message sent by the first communication device, the notification message being used for indicating the first time unit;
acquiring the predefined first time unit; and
determining the first time unit through blind detection.

Optionally, the device further includes:
a demodulation module, configured to perform polarization demodulation on the first signal.

The communication device receives the first signal which is the radar signal, and the polarization state of the first signal is determined by the first communication device according to the communication information bit to be sent, thereby realizing radar and communication signal integrated transmitting, and performing radar detection on a target while transferring communication information. In addition, the radar detection is usually in an LoS (LoS) scenario, in which a channel depolarization effect is low, thereby facilitating a receiving end for the polarization demodulation.

The communication device in the embodiment of this application may be a terminal, such as a mobile electronic device or a non-mobile electronic device. Exemplarily, the mobile electronic device may be a mobile phone, a tablet computer, a notebook computer, a palm computer, an vehicle-mounted electronic device, a wearable device, a UMPC, a netbook, or a PDA, or the like; and the non-mobile electronic device may be a server, a network attached storage (Network Attached Storage, NAS), a personal computer (Personal Computer, PC), a television (Television, TV), a teller machine, or a self-service machine, which are not specifically limited in the embodiment of this application. Of course, a network side device may also be adopted.

The communication device in the embodiment of this application may be a device with an operating system. The operating system may be an Android (Android) operating system, or an ios operating system, or another possible operating system, which is not specifically limited in the embodiment of this application.

The communication device in the embodiment of this application can implement all processes implemented by the second communication device in the method embodiment shown in FIG. 8, which is not repeated herein to avoid repetition.

Optionally, as shown in FIG. 11, an embodiment of this application further provides a communication device, including a processor 1101, a memory 1102 and a program or instruction stored in the memory 1102 and runnable on the processor 1101. For example, when the communication device 1100 is a terminal, the program or instruction, when performed by the processor 1101, implementing various processes of the embodiment of the above method for sending a radar and communication integrated signal, or the method for receiving a radar and communication integrated signal, and achieving the same technical effects. When the communication device 1100 is a first communication device, the program or instruction, when performed by the processor 1101, implementing various processes of the embodiment of the above method for sending a radar and communication integrated signal, and achieving the same technical effects, which will not be repeated herein to avoid repetition. When the communication device 1100 is a second communication device, the program or instruction, when performed by the processor 1101, implementing various processes of the embodiment of the above method for receiving a radar and communication integrated signal, and achieving the same technical effects, which is not repeated herein to avoid repetition.

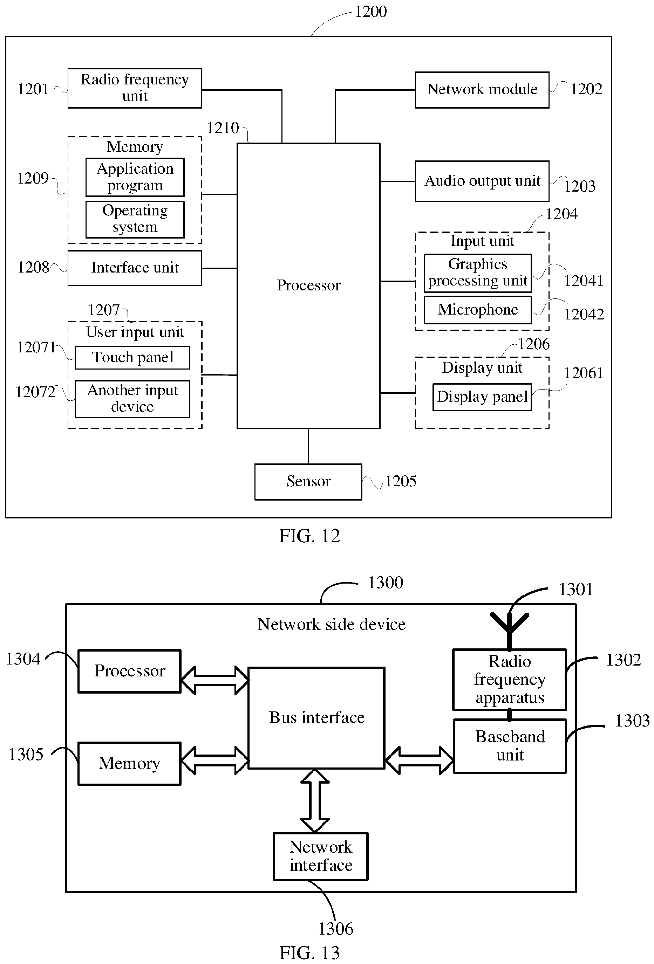

FIG. 12 is a schematic diagram of a hardware structure of a terminal serving as a communication device according to various embodiments of this application.

The terminal 1200 includes but not limited to: components such as a radio frequency unit 1201, a network module 1202, an audio output unit 1203, an input unit 1204, a sensor 1205, a display unit 1206, a user input unit 1207, an interface unit 1208, a memory 1209, a processor 1210.

Those skilled in the art should understand that the terminal 1200 may further include a power supply (such as a battery) for supplying power to the components. The power supply may be logically connected to the processor 1210 by a power management system, thereby implementing functions such as charging, discharging, and power consumption management by using the power management system. A terminal structure shown in FIG. 12 does not limit the terminal, and the terminal may include more or fewer components than those shown in the figure, or combine some components, or have different component arrangements, which is not repeated herein.

It is to be understood that in the embodiment of this application, the input unit 1204 may include a graphics processing unit (Graphics Processing Unit, GPU) 12041 and a microphone 12042. The graphics processing unit 12041 processes image data of a static image or a video that is obtained by an image acquisition apparatus (e.g., a camera) in a video acquisition mode or an image acquisition mode. The display unit 1206 may include a display panel 12061, and the display panel 12061 may be configured in the forms of using a liquid crystal display, an organic light-emitting diode, etc. The user input unit 1207 includes a touch panel 12071 and another input device 12072. The touch panel 12071 is also called a touch screen. The touch panel 12071 may include two parts: a touch detection apparatus and a touch controller. The another input device 12072 may include but not limited to, a physical keyboard, a functional key (e.g., a volume control key and a switch key), a track ball, a mouse, and a joystick, which is not repeated herein.

In the embodiment of this application, after downlink data from the network side device is received by the radio frequency unit 1201, the downlink data is processed by the processor 1210; and in addition, uplink data is sent to the network side device. Generally, the radio frequency unit 1201 includes but not limited to an antenna, at least one amplifier, a transceiver, a coupler, a low noise amplifier, a duplexer, etc.

The memory 1209 may be configured to store a software program or instruction and various data. The memory 1209 may mainly include a program or instruction storage area and a data storage area. The program or instruction storage area may store an operating system, an application program or instruction required by at least one function (e.g., a sound playback function and an image playback function), and the like. In addition, the memory 1209 may include a high speed random access memory, and may further include a non-volatile memory, where the nonvolatile memory may be a read-only memory (Read-Only Memory, ROM), a programmable ROM (Programmable ROM, PROM), an erasable PROM (Erasable PROM, EPROM), an electrically EPROM (Electrically EPROM, EEPROM) or a flash memory, such as at least one magnetic disk storage device, a flash memory device or another non-volatile solid-state storage device.

The processor 1210 may include one or more processing units. Optionally, the processor 1210 may integrate an application processor and a modem processor, where the application processor mainly processes an operating system, a user interface, an application program or instruction, and the like, and the modem processor mainly processes wireless communication, such as a baseband processor. It is to be understood that the modem processor may not be integrated into the processor 1210.

The processor 1210 is configured to determine a polarization state of a first signal according to a communication information bit to be sent; and send the first signal according to the polarization state of the first signal, where the first signal is radar signal.

The terminal realizes radar and communication signal integrated transmitting, and performs radar detection on a target while transferring communication information. In addition, the radar detection is usually in an LoS (LoS) scenario, in which a channel depolarization effect is low, thereby facilitating a receiving end for polarization demodulation.

Specifically, the embodiment of this application further provides a network side device serving as a communication device. As shown in FIG. 13, a network side device 1300 includes: an antenna 1301, a radio frequency apparatus 1302 and a baseband unit 1303. The antenna 1301 is connected to the radio frequency apparatus 1302. In an uplink direction, the radio frequency apparatus 1302 receives information through the antenna 1301, and sends the received information to the baseband unit 1303 for processing. In a downlink direction, the baseband unit 1303 processes information to be sent and sends the information to the radio frequency apparatus 1302, and the radio frequency apparatus 1302 processes the received information and then sends the information through the antenna 1301.

The above frequency band processing apparatus may be located in the baseband unit 1303, the method performed by the network side device in the above embodiments may be implemented in the baseband unit 1303, and the baseband unit 1303 includes a processor 1304 and a memory 1305.

The baseband unit 1303 may include at least one baseband board. The baseband board is provided with a plurality of chips. As shown in FIG. 13, one chip may be the processor 1304 connected with the memory 1305 so as to invoke a program in the memory 1305, thereby performing network device operation shown in the above method embodiments.

The baseband unit 1303 may further include a network interface 1306 configured to exchange information with the radio frequency apparatus 1302, and the interface may be a common public radio interface (Common Public Radio Interface, CPRI).

Specifically, the network side device in the embodiment of this application further includes: an instruction or program stored on the memory 1305 and runnable on the processor 1304, where the processor 1304 invokes the instruction or program in the memory 1305 to perform the method performed by various modules and achieve the same technical effects, which is not repeated herein to avoid repetition.

The embodiment of this application further provides a readable storage medium, storing a program or instruction. The program or instruction, when performed by a processor, implementing various processes of the embodiments of the above method for sending a radar and communication integrated signal or the method for receiving a radar and communication integrated signal and achieving the same technical effects, which is not repeated herein to avoid repetition.

The processor is the processor in the communication device in the above embodiments. The readable storage medium includes a computer-readable storage medium, such as a read-only memory (Read-Only Memory, ROM), a random access memory (Random Access Memory, RAM), a magnetic disk, or an optical disc.

The embodiment of this application further provides a chip, including a processor and a communication interface. The communication interface is coupled to the processor, and the processor is configured to run a program or instruction to implement various processes of the above method for sending a radar and communication integrated signal or the method for receiving a radar and communication integrated signal, and achieve the same technical effects, which is not repeated herein to avoid repetition.

It is to be understood that the chip provided by the embodiment of this application may also be called a system-level chip, a system chip, a chip system or a system on chip, etc.

The embodiment of this application further provides a computer program product stored in a non-volatile storage medium. The computer program product is performed by at least one processor to implement the steps in the embodiments of the above method for sending a radar and communication integrated signal or the method for receiving a radar and communication integrated signal, and achieve the same technical effects, which is not repeated herein to avoid repetition.

It is to be noted that, terms "comprise", "include" or any other variation thereof in the specification is intended to cover a non-exclusive inclusion, such that a process, a method, an object or an apparatus including a series of elements not only includes those elements but also includes other elements not clearly listed, or further includes inherent elements for the process, the method, the object or the apparatus. Elements limited by a sentence "including a...", without more limitations, indicate that additional same elements may also exist in the process, the method, the object or the apparatus including the elements. In addition, it is to be pointed out that the scope of the method and the apparatus in the implementation of this application is not limited to the shown or discussed sequence to perform functions, and involved functions may also be performed basically at the same time or in an opposite sequence. For example, the described method may be performed according to a sequence different from the described sequence, and various steps may also be added, omitted or combined. In addition, features described in some examples may also be referred to be combined in other examples.

According to the descriptions in the foregoing implementations, a person skilled in the art may clearly learn that the method according to the foregoing embodiment may be implemented by software and a necessary general-purpose hardware platform or hardware, and in most situations, the former is a preferred implementation. Based on such an understanding, the technical solutions of this application essentially or the part contributing to the prior art may be embodied in a form of a software product. The computer software product is stored in a storage medium (e.g., a ROM/RAM, a magnetic disk and an optical disc) and includes several instructions for instructing a terminal (which may be a mobile phone, a computer, a server, an air conditioner, or a network device, or the like) to perform the methods described in the embodiments of this application.

An ordinary person skilled in the art may notice that the exemplary units and algorithm steps described with reference to the embodiments disclosed in this specification can be implemented in electronic hardware, or a combination of computer software and electronic hardware. Whether the functions are performed in a mode of hardware or software depends on particular applications and design constraint conditions of the technical solutions. A person skilled in the art can use different methods to implement the described functions for each particular application, but it is not to be considered that the implementation goes beyond the scope of this application.

A person skilled in the art may clearly understand that for convenience and conciseness of description, for specific working processes of the foregoing systems, apparatuses and units, reference may be made to the corresponding processes in the foregoing method embodiments, which is not repeated herein.

In the embodiments provided in this application, it is to be understood that the disclosed apparatus and method may be implemented in other manners. For example, the described apparatus embodiment is merely an example. For example, the unit division is merely a logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate components may or may not be physically separated, and the components for unit display may or may not be physical units, and may be located in one place or may be distributed over a plurality of network units. Some or all of the units may be selected according to actual needs to achieve the objectives of the solutions of the embodiments.

In addition, functional units in the embodiments of this application may be integrated into one processing unit, or each of the units may physically exist, or two or more units may be integrated into one unit.

The embodiments of this application have been described above in combination with the drawings, but this application is not limited to the specific implementations described above, and the specific implementations described above are merely exemplary and not restrictive. An ordinary person skilled in the art may make various forms under the teaching of this application without departing from the spirit of this application and the scope of protection of the claims, and such forms shall all fall within the scope of protection of this application.

**Claims**

1. A method for sending a radar and communication integrated signal, performed by a first communication device, the method comprising:

   determining a polarization state of a first signal according to a communication information bit to be sent; and
   sending the first signal according to the polarization state of the first signal,

the first signal being radar signal.

2. The method according to claim 1, wherein the determining a polarization state of a first signal according to a communication information bit to be sent comprises:
determining the polarization state of the first signal according to an association relationship between the communication information bit to be sent and the polarization state.

3. The method according to claim 2, wherein

corresponding to different polarization modulation orders, association relationship between the communication information bit to be sent and the polarization state is different, and the polarization modulation order is associated with a number of an information bit carried by a single polarization modulation symbol; and
before the determining the polarization state of the first signal according to an association relationship between the communication information bit to be sent and the polarization state, the method further comprises:

receiving a second signal, the second signal being radar echo signal;
performing detection according to the second signal to obtain a detection result;
determining a current polarization modulation order according to the detection result; and
determining the association relationship between the communication information bit to be sent and the polarization state according to the current polarization modulation order.

4. The method according to claim 3, wherein the performing detection according to the second signal to obtain a detection result comprises:
performing polarization characteristic detection according to the polarization state and the second signal to obtain a detection result.

5. The method according to claim 1, wherein the sending the first signal according to the polarization state of the first signal comprises:
sending the first signal through an antenna corresponding to the polarization state.

6. The method according to claim 5, wherein the sending the first signal through an antenna corresponding to the polarization state comprises at least one of following manners:

sending, by a first antenna, the first signal;
sending, by a second antenna, the first signal;

sending, by the first antenna and the second antenna, the first signal; and
not sending, by the first antenna and the second antenna, the first signal,
the polarization state corresponding to the first antenna being orthogonal to the polarization state corresponding to the second antenna.

7. The method according to claim 6, wherein the first antenna is a horizontal polarized antenna, and the second antenna is a vertical polarized antenna; or, the first antenna is a left-hand circularly polarized antenna, and the second antenna is a right-hand circularly polarized antenna.

8. The method according to claim 1, wherein the sending the first signal according to the polarization state of the first signal comprises:

determining an amplitude ratio and a phase difference corresponding to the polarization state;
dividing, through a power divider network, the first signal into two signal components according to the determined amplitude ratio; and
setting, through a phase shift network, phases of the two signal components according to the determined phase difference.

9. The method according to claim 1, wherein the sending the first signal according to the polarization state of the first signal comprises:

sending the first signal based on a first time unit, the first time unit being a minimum duration that the first communication device performs polarization modulation on the first signal.

10. The method according to claim 9, wherein the first time unit is predefined.

11. The method according to claim 9, further comprising: sending a notification message, the notification message being used for indicating the first time unit.

12. The method according to claim 9, wherein the sending the first signal based on a first time unit comprises:

repeatedly transmitting the first signal with the first time unit as a basic unit; or,
after the first time unit is adjusted into a second time unit according to adjustment parameter sending the first signal in the second time unit.

13. The method according to claim 12, wherein the adjustment parameter is determined according to a detection result obtained after detection on radar echo signal.

**14.** A method for receiving a radar and communication integrated signal, performed by a second communication device, the method comprising:

receiving a first signal sent by a first communication device,
the first signal being radar signal, and a polarization state of the first signal being determined by the first communication device according to a communication information bit to be sent.

**15.** The method according to claim 14, wherein before the receiving a first signal sent by a first communication device, the method further comprises:

determining a first time unit; and
the receiving a first signal sent by a first communication device comprises:

receiving the first signal based on the first time unit,
the first time unit being a minimum duration that the first communication device performs polarization modulation on the first signal.

**16.** The method according to claim 15, wherein the determining a first time unit comprises at least one of following manners:

receiving a notification message sent by the first communication device, the notification message being used for indicating the first time unit;
acquiring the predefined first time unit; and
determining the first time unit through blind detection.

**17.** The method according to claim 14, wherein after the receiving a first signal sent by a first communication device, the method further comprises:
performing polarization demodulation on the first signal.

**18.** A communication device, comprising:

a first determining module, configured to determine a polarization state of a first signal according to a communication information bit to be sent; and
a sending module, configured to send the first signal according to the polarization state of the first signal,
the first signal being radar signal.

**19.** The device according to claim 18, wherein the first determining module is further configured to:
determine the polarization state of the first signal according to an association relationship between the communication information bit to be sent and the polarization state.

**20.** The device according to claim 19, wherein

corresponding to different polarization modulation orders, association relationship between the communication information bit to be sent and the polarization state is different, and the polarization modulation order is associated with a number of an information bit carried by a single polarization modulation symbol; and
the device further comprises:

a receiving module, configured to receive a second signal, the second signal being radar echo signal;
a detection module, configured to perform detection according to the second signal to obtain a detection result;
a first processing module, configured to determine a current polarization modulation order according to the detection result; and
a second processing module, configured to determine, according to the current polarization modulation order, an association relationship between the communication information bit and the polarization state.

**21.** The device according to claim 20, wherein the detection module comprises:
performing polarization characteristic detection according to the polarization state and the second signal to obtain a detection result.

**22.** The device according to claim 18, wherein the sending module comprises:
a first sending submodule, configured to send, by an antenna corresponding to the polarization state, the first signal.

**23.** The device according to claim 22, wherein the first sending submodule sends the first signal through at least one of following manners:

sending, by a first antenna, the first signal;
sending, by a second antenna, the first signal;
sending, by the first antenna and the second antenna, the first signal; and
not sending, by the first antenna and the second antenna, the first signal,
the polarization state corresponding to the first antenna being orthogonal to the polarization state corresponding to the second antenna.

**24.** The device according to claim 23, wherein the first antenna is a horizontal polarized antenna, and the second antenna is a vertical polarized antenna; or, the first antenna is a left-hand circularly polarized antenna, and the second antenna is a right-hand circularly polarized antenna.

25. The device according to claim 18, wherein the sending module comprises:

a determining submodule, configured to determine an amplitude ratio and a phase difference corresponding to the polarization state; a first processing submodule, configured to divide, through a power divider network, the first signal into two signal components according to the determined amplitude ratio; and a second processing submodule, configured to set, through a phase shift network, phases of the two signal components according to the determined phase difference.

26. The device according to claim 18, wherein the sending module is further configured to:

send the first signal based on a first time unit, the first time unit being a minimum duration that a first communication device performs polarization modulation on the first signal.

27. The device according to claim 26, wherein the first time unit is predefined.

28. The device according to claim 26, further comprising: a notification module, configured to send a notification message, the notification message being used for indicating the first time unit.

29. The device according to claim 26, wherein the sending module is further configured to:

repeatedly transmit the first signal with the first time unit as a basic unit; or, after the first time unit is adjusted into a second time unit according to adjustment parameter, sending the first signal in the second time unit.

30. The device according to claim 29, wherein the adjustment parameter is determined according to a detection result obtained after detection on radar echo signal.

31. A communication device, comprising:

a receiving module, configured to receive a first signal sent by a first communication device, the first signal being radar signal, and a polarization state of the first signal being determined by the first communication device according to a communication information bit to be sent.

32. The device according to claim 31, further comprising:

a second determining module, configured to determine a first time unit; and the receiving module being further configured to:

receive the first signal based on the first time unit, the first time unit being a minimum duration that the first communication device performs polarization modulation on the first signal.

33. The device according to claim 32, wherein the second determining module determines the first time unit through at least one of following manners:

receiving a notification message sent by the first communication device, the notification message being used for indicating the first time unit; acquiring the predefined first time unit; and determining the first time unit through blind detection.

34. The device according to claim 31, further comprising: a demodulation module, configured to perform polarization demodulation on the first signal.

35. A communication device, comprising a processor, a memory, and a program or instruction stored on the memory and runnable on the processor, the program or instruction, in a case that performed by the processor, implementing the steps of the method for sending a radar and communication integrated signal according to any one of claims 1 to 13, or the steps of the method for receiving a radar and communication integrated signal according to any one of claims 14 to 17.

36. A readable storage medium, storing a program or instruction, the program or instruction, in a case that performed by a processor, implementing the steps of the method for sending a radar and communication integrated signal according to any one of claims 1 to 13, or the steps of the method for receiving a radar and communication integrated signal according to any one of claims 14 to 17.

37. A chip, comprising a processor and a communication interface, the communication interface being coupled to the processor, and the processor being configured to run a program or instruction to implement the steps of the method for sending a radar and communication integrated signal according to any one of claims 1 to 13, or the steps of the method for receiving a radar and communication integrated signal according to any one of claims 14 to 17.

**38.** A computer program product, stored in a non-volatile storage medium, the computer program product, in a case that performed by at least one processor, implementing the steps of the method for sending a radar and communication integrated signal according to any one of claims 1 to 13, or the steps of the method for receiving a radar and communication integrated signal according to any one of claims 14 to 17.

**39.** A communication device, configured to perform the steps of the method for sending a radar and communication integrated signal according to any one of claims 1 to 13, or the steps of the method for receiving a radar and communication integrated signal according to any one of claims 14 to 17.

FIG. 1

FIG. 2

Start

Receive a second signal, the second signal being radar echo signal — 301

Perform detection according to the second signal to obtain a detection result — 302

Determine a current polarization modulation order according to the detection result — 303

Determine an association relationship between the communication information bit to be sent and the polarization state according to the current polarization modulation — 304

End

FIG. 3

Radar signal $S_i$ → Power divider network

$S_i \sin \delta_i$ → Phase shift network

$S_i \cos \delta_i$

$S_i \sin \delta_i e^{j\varphi_i}$

$S_i \cos \delta_i$

Communication information bit → Polarization state processing unit

FIG. 4

FIG. 5

FIG. 6

Radar baseband processing unit → Sending front end

Detection result

Polarization state processing unit

Communication baseband processing unit

Communication information bit

Radar echo signal processing unit ← Receiving front end

Communication signal processing unit ←

FIG. 7

Start

Receive a first signal sent by a first communication device, where the first signal is radar signal, and a polarization state of the first signal is determined by the first communication device according to a communication information bit to be sent

801

End

FIG. 8

First determining module — 910

Sending module — 920

FIG. 9

Receiving module — 1010

FIG. 10

1100

Communication device

1101 — Processor ⟷ Memory — 1102

FIG. 11

FIG. 12

FIG. 13

## INTERNATIONAL SEARCH REPORT

| International application No. |
| --- |
| **PCT/CN2022/070271** |

**A. CLASSIFICATION OF SUBJECT MATTER**

G01S 7/28(2006.01)i

According to International Patent Classification (IPC) or to both national classification and IPC

**B. FIELDS SEARCHED**

Minimum documentation searched (classification system followed by classification symbols)

G01S

Documentation searched other than minimum documentation to the extent that such documents are included in the fields searched

Electronic data base consulted during the international search (name of data base and, where practicable, search terms used)

WPI, EPODOC, CNPAT, CNKI: 雷达, 通信, 极化, 比特, 调制, 阶数, 关联, 对应, 映射, 一体化, 多系统, bit, radar, communication, polarization, modulation, association, correspond+, mapping, integration, multi, system

**C. DOCUMENTS CONSIDERED TO BE RELEVANT**

| Category* | Citation of document, with indication, where appropriate, of the relevant passages | Relevant to claim No. |
| --- | --- | --- |
| X | CN 1926783 A (MOTOROLA INC.) 07 March 2007 (2007-03-07) description page 4 line 2 to page 7 line 14, page 11 lines 2-30, page 17 line 9 to page 22 line 24 | 1-39 |
| A | CN 103728601 A (XIDIAN UNIVERSITY) 16 April 2014 (2014-04-16) entire document | 1-39 |
| A | CN 105137400 A (HARBIN INSTITUTE OF TECHNOLOGY) 09 December 2015 (2015-12-09) entire document | 1-39 |
| A | CN 108134193 A (HARBIN INSTITUTE OF TECHNOLOGY, WEIHAI) 08 June 2018 (2018-06-08) entire document | 1-39 |
| A | CN 110726974 A (BEIJING UNIVERSITY OF POSTS AND TELECOMMUNICATIONS) 24 January 2020 (2020-01-24) entire document | 1-39 |
| A | US 2014266866 A1 (NOKIA CORPORATION) 18 September 2014 (2014-09-18) entire document | 1-39 |

☐ Further documents are listed in the continuation of Box C.　　☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **11 March 2022** | **29 March 2022** |

| Name and mailing address of the ISA/CN | Authorized officer |
| --- | --- |
| **China National Intellectual Property Administration (ISA/ CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

## INTERNATIONAL SEARCH REPORT
### Information on patent family members

| International application No. |
| --- |
| **PCT/CN2022/070271** |

| Patent document cited in search report | | | Publication date (day/month/year) | Patent family member(s) | | | Publication date (day/month/year) |
| --- | --- | --- | --- | --- | --- | --- | --- |
| CN | 1926783 | A | 07 March 2007 | EP | 1652311 | A2 | 03 May 2006 |
| | | | | JP | 2007506291 | A | 15 March 2007 |
| | | | | WO | 2005025074 | A2 | 17 March 2005 |
| | | | | KR | 20060054398 | A | 22 May 2006 |
| | | | | KR | 100707287 | B1 | 16 April 2007 |
| | | | | US | 2004264592 | A1 | 30 December 2004 |
| | | | | US | 7310379 | B2 | 18 December 2007 |
| CN | 103728601 | A | 16 April 2014 | CN | 103728601 | B | 28 October 2015 |
| CN | 105137400 | A | 09 December 2015 | | None | | |
| CN | 108134193 | A | 08 June 2018 | | None | | |
| CN | 110726974 | A | 24 January 2020 | WO | 2021073435 | A1 | 22 April 2021 |
| US | 2014266866 | A1 | 18 September 2014 | US | 9285461 | B2 | 15 March 2016 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202110026232